# EUROPÄISCHE PATENTANMELDUNG

(11) **EP 1 757 830 A2**
(43) Veröffentlichungstag der Anmeldung: **28.02.2007**
(21) Anmeldenummer: 06015796.3
(22) Anmeldetag: 28.07.2006
(51) Int. Cl.: F16D 23/02

(54) **Anordnung von mindestens zwei Synchronringen einer Synchronisiereinrichtung**

(30) Priorität: 27.08.2005 DE 102005040691
(71) Anmelder: Schaeffler KG, 91074 Herzogenaurach (DE)
(72) Erfinder: Kohtes, Pascal, 91074 Herzogenaurach (DE); Martin, Reiner, 96178 Pommersfelden (DE); Spoerl, Marcus, 91126 Rednitzhembach (DE)

(57) **Zusammenfassung**

Die Erfindung betrifft eine Anordnung (1) von mindestens zwei um eine Drehachse (2) drehbaren Synchronringen (3, 4, 5) einer Synchronisiereinrichtung, wobei Mittel (6) vorhanden sind, mit denen die mindestens-zwei Synchronringe (3, 4, 5) verliersicher zusammengehalten werden können. Um in besonders einfacher Weise die Anordnung der Synchronringe verliersicher zu gestalten, ist erfindungsgemäß vorgesehen, dass die Mittel (6) mindestens einen an einem der Synchronringe (3), insbesondere an einem Synchron-Innenring, angeordneten Halteabschnitt oder Haltekörper (7) aufweisen, der sich im wesentlichen in axialer Richtung (A) durch mindestens eine Ausnehmung oder Durchbrechung (8) in einem anderen der Synchronringe (4), insbesondere in einem Synchron-Außenring, erstreckt, wobei im axialen Endbereich (9) des Halteabschnitts (7) ein die Ausnehmung oder Durchbrechung (8) in radiale Richtung und/oder in Umfangsrichtung überragendes Halteelement (10) angeordnet ist.

## Beschreibung

### Gebiet der Erfindung

Die Erfindung betrifft eine Anordnung von mindestens zwei um eine Drehachse drehbaren Synchronringen einer Synchronisiereinrichtung, wobei Mittel vorhanden sind, mit denen die mindestens zwei Synchronringe verliersicher zusammengehalten werden können.

### Hintergrund der Erfindung

Eine Synchronisiereinrichtung dient zum Schalten von Gangrädern in einem Getriebe. Dabei wird meist eine Anordnung von Synchronringen einem Gangrad zugeordnet. Die Anordnung hat mindestens zwei und häufig drei Synchron-ringe, nämlich einen Synchron-Innenring, einen Synchron-Außenring und einen dazwischen angeordneten Synchron-Zwischenring. Die Synchronringe sind längs der Drehachse der Getriebewelle bzw. längs der Drehachse der Synchronringe so ineinander geschoben, dass der Synchron-Außenring den Synchron-Innenring in Umfangsrichtung umfasst.

Bei der Anordnung von drei Synchronringen ist radial zwischen dem Synchron-Innenring und dem Synchron-Außenring der Synchron-Zwischenring angeordnet. Jeder Synchronring weist mindestens eine Ringfläche auf, mit der während der Synchronisation der Drehzahlen der Getriebewelle mit den Drehzahlen der zu schaltenden Gangräder ein reibschlüssiger Kontakt zu einer weiteren Ringfläche hergestellt wird. Jede der Reibflächen liegt an einem der Synchronringe einer Reibfläche eines anderen Synchronringes gegenüber. Hierzu weist der Synchron-Außenring eine an seinem Innenumfang angeordnete Innenfläche auf, der eine Außenfläche an dem Synchron-Innenring bzw. an dem Synchron-Zwischenring gegenüberliegt. Der Synchron-Zwischenring hat neben einer äußeren Reibfläche eine innere Reibfläche für den Reibkontakt, da er mit zwei Synchronringen, nämlich mit dem Synchron-Außenring und dem Synchron-Innenring, in Reibkontakt kommt.

Die Reibflächen sind entweder die Ringflächen selber oder es sind auf die Ringflächen aufgebrachte Reibbeschichtungen. Der Innen- bzw. Außenumfang einer jeden Innenfläche bzw. Außenfläche nimmt in Achsrichtung der Drehachse zu, so dass jede der Flächen die Form eines Kreiskegelstumpfes aufweist, die als Reibkonus bezeichnet wird. Die drei Synchronringe sind in der Anordnung so ineinander geschoben, dass die einzelnen Umfänge der miteinander korrespondierenden Flächen um die Drehachse in die gleiche Richtung um die Drehachse der Anordnung zunehmen. Die längs ineinander geschobenen Synchronringe sind damit über ihre konischen Reibflächen während des Reibkontakts aneinander zentriert und zueinander konzentrisch angeordnet.

Der Synchron-Innenring ist an dem Synchron-Zwischenring oder dem Synchron-Außenring in einer der Längsrichtungen der Drehachse am Außenring gehalten, da an den längs ineinander gesteckten Synchronringen der kleinste Innenumfang der Innenfläche kleiner ist als der Umfang der mit der Innenfläche zusammenwirkenden Außenfläche; in die andere Achsrichtung sind die Synchronringe voneinander lösbar.

Die Synchronringe werden meist einzeln zur Montage in die Synchronisiereinrichtung verbracht und dann gepaart, d. h. zu einer Anordnung zusammengesteckt und verbaut. Der Aufwand für die Lagerung, den Transport und die Montage ist dabei relativ groß.

Daher ist es aus der DE 102 44 492 A1 bekannt, zwecks Reduzierung des Aufwands bei Lagerung, Transport und Montage vorzusehen, dass sich in der Anordnung der Synchronringe an den größten Umfang der Außenfläche in der Längsrichtung der Drehachse ein Halteelement anschließt, wobei dieses zum Halten zumindest eines zweiten Synchronringes an dem ersten vorgesehen ist. Damit wird eine verliersichere Anordnung der Synchronringe erreicht.

Die DE 100 18 092 A1 offenbart eine Synchronisiereinrichtung mit einem Synchronkörper und mindestens einem in diesen eingreifenden Synchronring, wobei der Synchronkörper aus einem ersten und zweiten aus Blech bestehenden Abschnitt hergestellt ist, die stirnseitig miteinander verbunden sind, und wobei der Synchronkörper in eine Richtung stirnseitig mit Ausnehmungen versehen ist, in die der Synchronring mit Mitnehmernocken eingreifen kann. Um auch hier eine kostengünstige Montage zu erreichen, ist vorgesehen, dass die Abschnitte stirnseitig einen ringförmig ausgebildeten Hohlraum einschließen und die Ausnehmungen in mindestens einen den Hohlraum begrenzenden ersten Wandabschnitt eingebracht sind.

### Aufgabe der Erfindung

Der vorliegenden Erfindung liegt die **Aufgabe** zugrunde, den Transport- und Lagerungsaufwand der Teile einer Synchronisationseinrichtung sowie den Montageaufwand einer Synchronisationseinrichtung weiter zu reduzieren. Der Verbund von mindestens zwei Synchronringen soll mit möglichst wenig Bauteilen hergestellt werden können. Dabei soll auch eine Indexierung zweier Bauteile der Synchronisiereinrichtung in Drehrichtung relativ zueinander erreichbar sein. Der Bauraum der Anordnung der Synchronringe soll sich nicht in nachteiliger Weise vergrößern. Schließlich soll die Schaffung des Verbunds der Ringe kostengünstig möglich sein.

### Zusammenfassung der Erfindung

Die Lös u n g dieser Aufgabe durch die Erfindung ist dadurch gekennzeichnet, dass die Mittel zum verliersicheren Zusammenhalten mindestens einen an einem der Synchronringe, insbesondere an einem Synchron-Innenring, angeordneten Halteabschnitt oder Haltekörper aufweisen, der sich im wesentlichen in axialer Richtung durch mindestens eine Ausnehmung oder Durchbrechung in einem anderen der Synchronringe, insbesondere in einem Synchron-Außenring, erstreckt, wobei im axialen Endbereich des Halteabschnitts ein die Ausnehmung oder Durchbrechung in radiale Richtung und/oder in Umfangsrichtung überragendes Halteelement angeordnet ist.

Dabei sieht eine vorteilhafte Ausführungsform vor, dass der Halteabschnitt oder Haltekörper mit dem Synchronring, insbesondere mit dem Synchron-Innenring, über einen sich radial erstreckenden Stegabschnitt verbunden ist. In diesem Falle können eine der Anzahl der Halteabschnitte oder Haltekörper entsprechende Anzahl Stegabschnitte über den Umfang des Synchronrings, insbesondere des Synchron-Innenrings, vorzugsweise äquidistant, angeordnet sein; insbesondere können drei Stegabschnitte über den Umfang des Synchronrings äquidistant angeordnet werden.

Besonders bevorzugt ist die mindestens eine Durchbrechung im Synchronring, insbesondere im Synchron-Außenring, als Ausstanzung oder Bohrung ausgebildet und allseitig vom Material des Synchronrings umgeben. In vorteilhafter Weise wird damit die Stabilität des mit den Ausnehmungen versehenen Synchronrings nicht wesentlich reduziert, wie es der Fall sein kann, wenn sich die Ausnehmung von der radial außenliegenden Seite des Rings nach innen erstreckt.

Das Halteelement kann als sich radial nach innen erstreckender, am Halteabschnitt oder Haltekörper angeordneter Vorsprung ausgebildet sein.

Möglich ist es alternativ hierzu, dass das Halteelement als sich einseitig in Umfangsrichtung erstreckender, am Halteabschnitt oder Haltekörper angeordneter Vorsprung ausgebildet ist. Es kann als Variante zu der letztgenannten Lösung aber auch vorgesehen werden, dass das Halteelement als sich beidseitig in Umfangsrichtung erstreckender, am Halteabschnitt oder Haltekörper angeordneter Vorsprung ausgebildet ist. In beiden Fällen kann zwecks Erleichterung der Montage das Halteelement mindestens eine sich zum axialen Ende hin verjüngende Einführschräge aufweisen. Eine spezielle Ausführungsform sieht vor, dass das Halteelement pfeilförmig ausgebildet ist. Damit kann in einfacher Weise ein Herstellen des Verbunds der Synchronringe erfolgen.

Eine andere Ausgestaltung der Erfindung sieht vor, dass das Halteelement als Ring ausgebildet ist, der in einer im Halteabschnitt oder Haltekörper eingearbeitete Nut angeordnet ist. Der Ring kann sich dabei vom Halteabschnitt oder Haltekörper aus radial nach innen erstrecken.

Bei den genannten Lösungen können der Synchronring, insbesondere der Synchron-Innenring, und der Halteabschnitt oder Haltekörper einstückig ausgebildet sein; es ist alternativ hierzu aber auch möglich, dass der Synchronring, insbesondere der Synchron-Innenring, und der Halteabschnitt oder Haltekörper als separate miteinander verbundene Körper ausgebildet sind.

Eine weitere alternative Ausgestaltung der Erfindung sieht vor, dass der Halteabschnitt oder Haltekörper als Federabschnitt ausgebildet ist. In diesem Falle hat es sich bewährt, dass der Federabschnitt in seinem axialen Endbereich das sich radial nach innen erstreckende Halteelement aufweist. Der Federabschnitt kann dabei Teil einer Federspange sein, die an einem der Synchronringe, insbesondere an dem Synchron-Innenring, in einem axialen Endbereich angelegt ist. Der Synchronring, insbesondere der Synchron-Innenring, kann dabei für die Aufnahme der Federspange eine Ausnehmung aufweisen.

Der Erfindungsvorschlag ermöglicht eine sehr einfache Handhabung der verliersicher verbundenen Synchronringe bis zur Endmontage. Die einzelnen zur Anordnung gehörigen Synchronringe werden dauerhaft und mit geringem Aufwand bleibend verbunden.

Die Verliersicherung muss vor der Montage nicht entfernt werden. Es sind weiterhin gar keine oder nur wenige zusätzliche Bauteile für die Verliersicherung nötig, so dass der Erfindungsvorschlag kostengünstig realisiert werden kann.

In einfacher Weise kann damit auch eine Indexierung zweier Bauteile der Synchronisiereinrichtung erreicht werden, d. h. die relative Positionierung zweier Bauteile in definierter Drehstellung zueinander. Dies ist insbesondere zwischen dem Synchron-Außenring und der Schiebemuffe von Vorteil.

Die für die Montage erforderlichen Kräfte sind akzeptabel, die Haltekräfte für den Transport und die Montage hinreichend.

Ein wichtiger Vorteil ist ferner, dass der Bauraum der Anordnung der Synchron-ringe nicht vergrößert ist.

Der Erfindungsvorschlag kann für die verschiedensten Synchronringausführungen eingesetzt werden, beispielsweise für Ringe in Kronen- oder Topfform.

Der vorgesehene Sicherungsmechanismus ist hinsichtlich möglicher Härteverzüge unproblematisch.

### Kurze Beschreibung der Figuren

In den Zeichnungen sind Ausführungsbeispiele der Erfindung dargestellt. Es zeigen:
- Fig. 1: den Radialschnitt durch eine Anordnung bestehend aus einem Synchron-Innenring, einem Synchron-Zwischenring und einem Synchron-Außenring, die zu einer verliersicheren Einheit verbunden sind,
- Fig. 2: eine zu Fig. 1 alternativ ausgeführte Anordnung der Synchronringe,
- Fig. 3: einen Ausschnitt der Anordnung gemäß Fig. 2, teilweise geschnitten dargestellt, gemäß der Ansicht B nach Fig. 2,
- Fig. 4: eine zu Fig. 3 alternative Lösung,
- Fig. 5: die Anordnung gemäß Fig. 2 in perspektivischer Ansicht von der linken Seite in Fig. 2 aus betrachtet,
- Fig. 6: den Synchron-Innenring der Anordnung gemäß Fig. 5 in perspektivischer Ansicht von der rechten Seite in Fig. 2 aus betrachtet,
- Fig. 7: einen Ausschnitt der Anordnung gemäß Fig. 5 in perspektivischer Ansicht und teilweise geschnitten dargestellt,
- Fig. 8: die Anordnung gemäß Fig. 5 von der rechten Seite in Fig. 2 aus betrachtet,
- Fig. 9: eine weitere zu Fig. 1 alternativ ausgeführte Anordnung der Synchronringe,
- Fig. 10: einen Ausschnitt der Anordnung gemäß Fig. 9 in perspektivischer Ansicht und teilweise geschnitten dargestellt,
- Fig. 11: die Anordnung gemäß Fig. 9 von der rechten Seite in Fig. 9 aus betrachtet und
- Fig. 12: eine weitere zu Fig. 1 alternativ ausgeführte Anordnung der Synchronringe.

### Ausführliche Beschreibung der Figuren

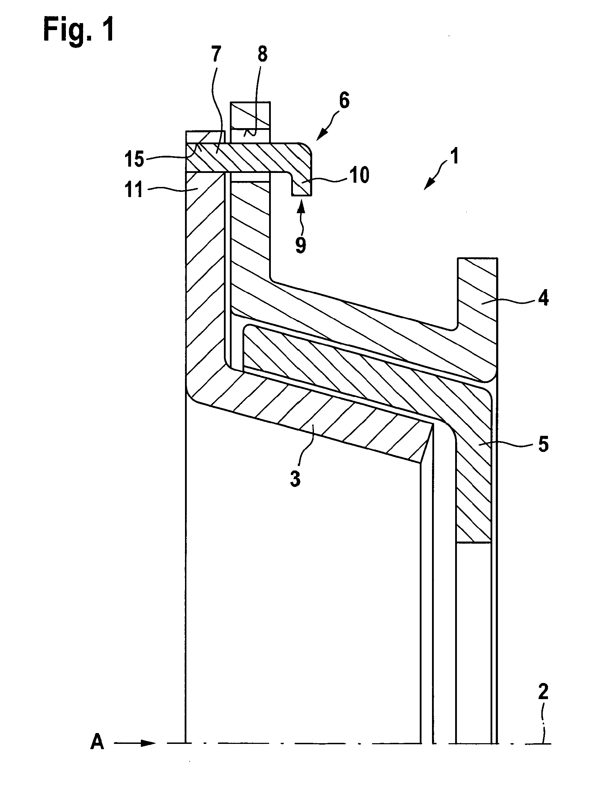

In Fig. 1 ist im Radialschnitt eine Anordnung 1 dreier Synchronringe zu sehen, nämlich eines Synchron-Innenrings 3, eines Synchron-Außenrings 4 und eines Synchron-Zwischenrings 5, die - wie oben erläutert - jeweils konische Reibflächen aufweisen. Die drei Synchronringe 3, 4, 5 drehen sich im Betrieb der nicht dargestellten Synchronisiereinrichtung um die Drehachse 2.

Die drei Synchronringe 3, 4, 5 sind als Anordnung 1 verliersicher miteinander verbunden, so dass die Montage der Anordnung 1 in die Synchronisiereinrichtung in einfacher Weise möglich ist. Dies wird durch Mittel 6 bewerkstelligt, die einen Zusammenhalt der drei Ringe sicherstellen.

Hierfür weist der Synchron-Innenring 3 an drei Umfangsstellen einen streifenförmig ausgebildeten und sich radial erstreckenden Stegabschnitt 11 auf, an dessen radial äußerem Ende ein Halteabschnitt bzw. ein Haltekörper 7 angeordnet ist. Letzterer erstreckt sich in Achsrichtung A durch eine Durchbrechung 8 im Synchron-Außenring 4, die als Ausstanzung oder Bohrung ausgebildet ist. Vorliegend ist der Haltekörper 7 in eine Bohrung oder Ausnehmung 15 im Stegabschnitt 11 eingepresst, um den Stegabschnitt 11 mit dem Haltekörper 7 zu verbinden.

Im vom Stegabschnitt 11 entfernten axialen Endbereich 9 des Haltekörpers 7 ist ein Halteelement 10 angeordnet bzw. aus dem Material des Haltekörpers 7 ausgeformt. Das Halteelement 10 stellt bei der in Fig. 1 skizzierten Lösung einen sich radial erstreckenden, hakenartigen Vorsprung dar, der radial so weit reicht, dass er ein Herausziehen des Halteabschnitts 7 aus der Ausnehmung 8 im montierten Zustand der Anordnung 1 verhindert.

Damit wird erreicht, dass die drei Ringe 3, 4, 5 unverlierbar und als Einheit formiert vorliegen und so verbaut werden können.

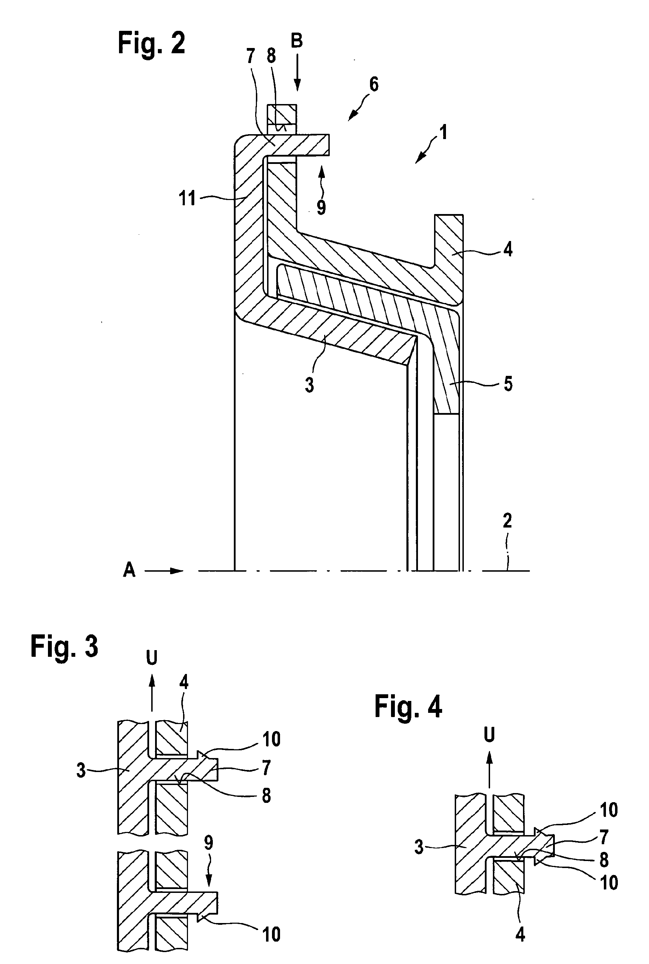

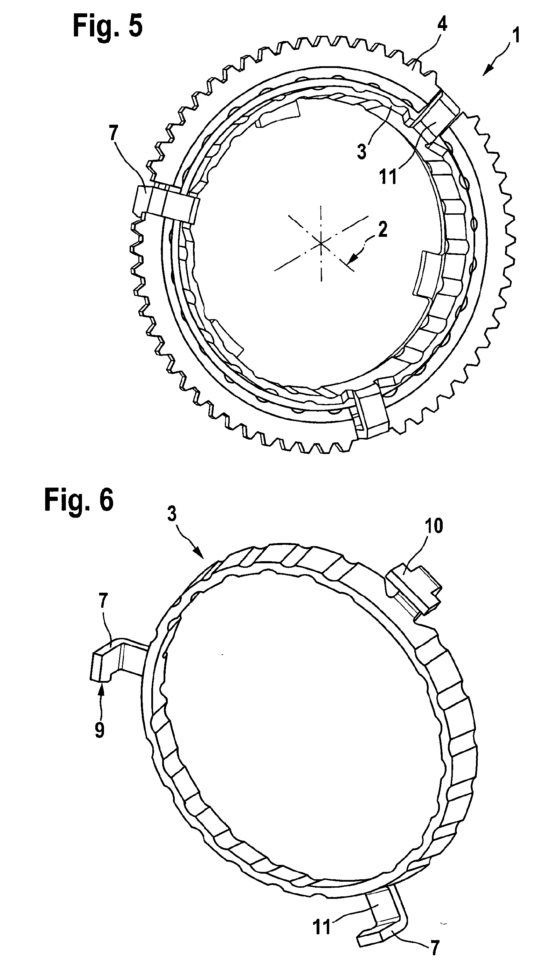

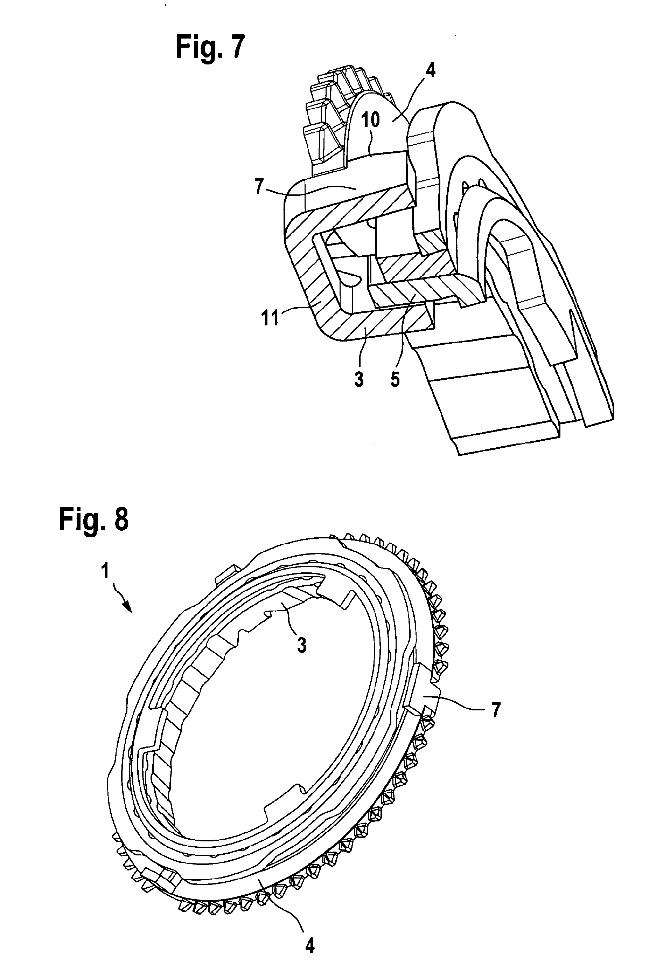

Die in den Figuren 2 bis 8 in verschiedenen Ansichten skizzierte alternative Ausführungsform der Erfindung zielt darauf ab, dass der oder die Halteelemente 10 im axialen Endbereich 9 des Halteabschnitts 7 nicht radial, sondern in Umfangsrichtung die Ausnehmung 8 überragen und so ein Herausziehen des Halteabschnitts 7 aus der Ausnehmung 8 verhindern.

Wie in Fig. 2 zu sehen ist, erstreckt sich auch hier der Halteabschnitt 7 durch die Ausnehmung 8 im Synchron-Außenring 4 axial hindurch. Aus der Ansicht B gemäß Fig. 2, die in Fig. 3 zu sehen ist, geht jedoch hervor, dass sich die Halteelemente 10 in Umfangsrichtung U erstrecken und so einen hakenförmigen Vorsprung bilden. Dabei können - wie es Fig. 3 zeigt - zwei benachbarte Halteelemente 10 gegensinnig orientiert sein. Wie es in Fig. 4 gemäß einer anderen Lösung zu sehen ist, können zwei Halteelemente 10 auch beidseitig des Halteabschnitts 7 angeordnet sein. In allen genannten Fällen kann das Halteelement mit Einführschräge ausgebildet sein, so dass sich für die Lösung gemäß Fig. 4 eine pfeilförmige Ausgestaltung des axialen Endes 9 des Halteabschnitts 7 ergibt. Damit ist es in einfacher Weise möglich, die Ringe 3 und 4 durch Einschnappen der Halteelemente 10 durch die Ausnehmungen 8 hindurch zu verbinden, wobei dann aufgrund der durch die Halteelemente 10 gebildeten Hinterschnitte ein Lösen beider Ringe 3, 4 bei normalen (Montage-Kräften nicht erfolgen kann.

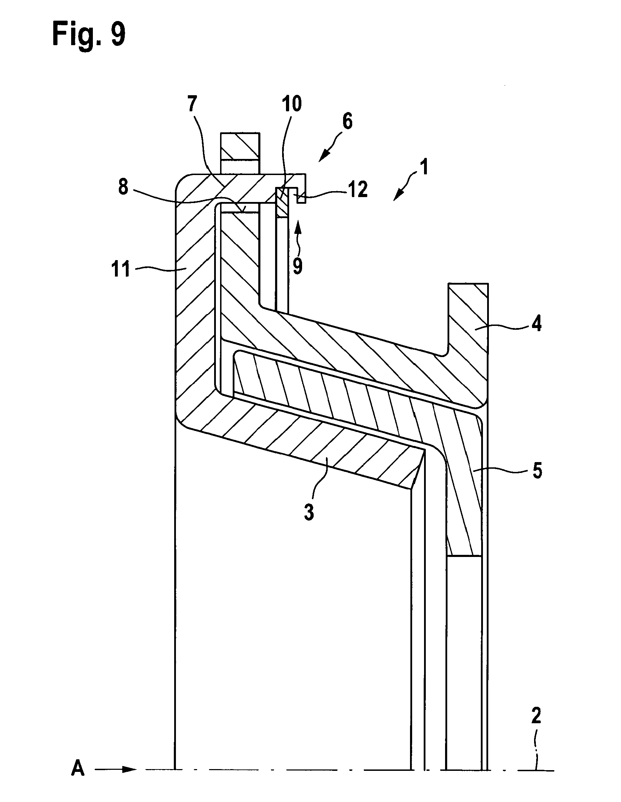

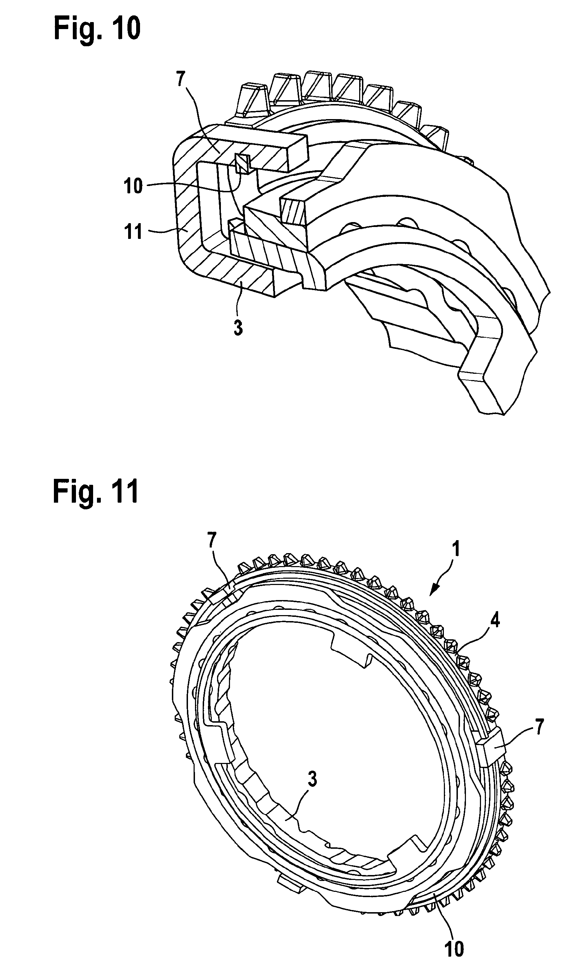

Die Ausführungsform nach Fig. 9 sieht vor, dass in den axialen Endbereich 9 des Halteelements 10 eine Nut 12 eingearbeitet ist, die zur Aufnahme eines Rings aus federelastischem Material geeignet ist, der das Halteelement 10 bildet. Der Ring 10 kann an einer Umfangsstelle unterbrochen sein, um eine leichtere Montage zu ermöglichen. Durch die federelastischen Eigenschaften des Rings 10 springt dieser nach dem Zusammenstecken der Ringe 3, 4, 5 in die Nut ein, so dass der verliersichere Verbund der Ringe 3, 4, 5 hergestellt ist. Die Figuren 10 und 11 zeigen andere Ansichten der in Fig. 9 dargestellten Lösung.

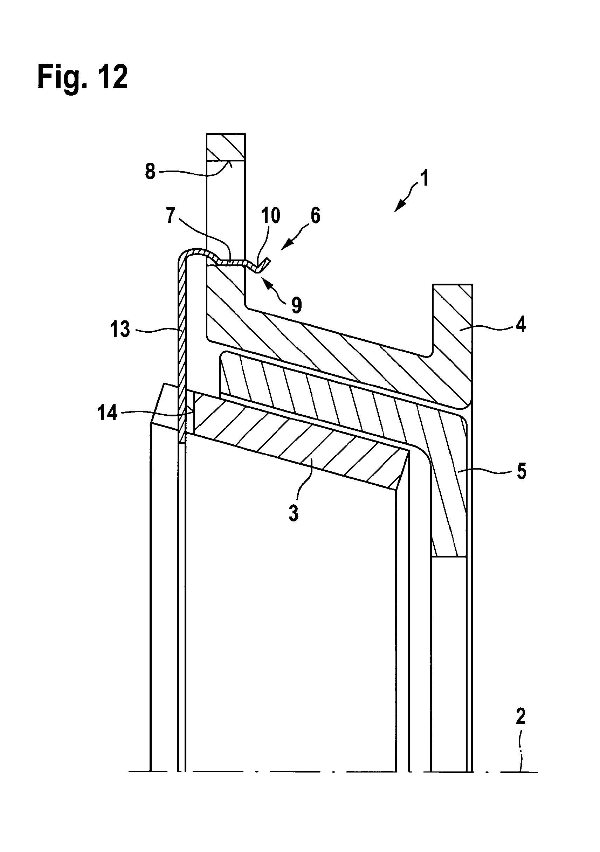

In Fig. 12 ist eine weitere alternative Ausführungsform der Erfindung zu sehen. Hier ist der Halteabschnitt 7 mit seinem im axialen Endbereich 9 angeordneten Halteelement 10 als Federspange 13 ausgeführt. Die Federspange 13 kann in einer Ausnehmung 14 im stirnseitigen axialen Endbereich des Synchron-Innenrings 3 zu liegen kommen.

Der Halteabschnitt 7 ist als Federelement ausgeführt, und das Halteelement 10 wird durch einen radial nach innen gebogenen Teil des Halteabschnitts 7 im axialen Endbereich 9 gebildet.

Die Federspange 13 wird nach dem Zusammenstecken der Ringe 3, 4, 5 seitlich (in Fig. 12 von links) auf den Ring-Verbund aufgeschoben, bis die Federspange 13 in der Ausnehmung 14 zu liegen kommt. Dabei wird der federnde Halteabschnitt 7 mit dem Halteelement 10 durch die Ausnehmung 8 hindurchgeschoben, so dass die in Fig. 12 skizzierte Endlage erreicht wird. In dieser ist die Anordnung 1 der drei Ringe 3, 4, 5 hergestellt.

Als Durchbrechung 8 kommt bevorzugt eine Ausstanzung oder Bohrung in einem der Synchron-Ringe, vorzugsweise im Synchron-Außenring 4, in Frage. Bei einigen der erläuterten Lösungen kann aber auch eine Ausnehmung 8 vorgesehen werden, die sich vom radial außen liegenden Rand des Rings 4 radial nach innen erstreckt.

### Bezugszeichenliste:

- 1: Anordnung von Synchronringen
- 2: Drehachse
- 3: Synchronring (Synchron-Innenring)
- 4: Synchronring (Synchron-Außenring)
- 5: Synchronring (Synchron-Zwischenring)
- 6: Mittel zum verliersicheren Zusammenhalten
- 7: Halteabschnitt / Haltekörper
- 8: Ausnehmung / Durchbrechung
- 9: axialer Endbereich
- 10: Halteelement
- 11: Stegabschnitt
- 12: Nut
- 13: Federspange
- 14: Ausnehmung
- 15: Bohrung / Ausnehmung

- A: axiale Richtung
- U: Umfangsrichtung

## Patentansprüche

1. Anordnung (1) von mindestens zwei um eine Drehachse (2) drehbaren Synchronringen (3, 4, 5) einer Synchronisiereinrichtung, wobei Mittel (6) vorhanden sind, mit denen die mindestens zwei Synchronringe (3, 4, 5) verliersicher zusammengehalten werden können,
**dadurch gekennzeichnet,**
**dass** die Mittel (6) mindestens einen an einem der Synchronringe (3), insbesondere an einem Synchron-Innenring, angeordneten Halteabschnitt oder Haltekörper (7) aufweisen, der sich im wesentlichen in axialer Richtung (A) durch mindestens eine Ausnehmung oder Durchbrechung (8) in einem anderen der Synchronringe (4), insbesondere in einem Synchron-Außenring, erstreckt, wobei im axialen Endbereich (9) des Halteabschnitts (7) ein die Ausnehmung oder Durchbrechung (8) in radiale Richtung und/oder in Umfangsrichtung überragendes Halteelement (10) angeordnet ist.

2. Anordnung nach Anspruch 1, **dadurch gekennzeichnet, dass** der Halteabschnitt oder Haltekörper (7) mit dem Synchronring (3), insbesondere mit dem Synchron-Innenring, über einen sich radial erstreckenden Stegabschnitt (11) verbunden ist.

3. Anordnung nach Anspruch 2, **dadurch gekennzeichnet, dass** eine der Anzahl der Halteabschnitte oder Haltekörper (7) entsprechende Anzahl Stegabschnitte (11) über den Umfang des Synchronrings (3), insbesondere des Synchron-Innenrings, vorzugsweise äquidistant, angeordnet sind.

4. Anordnung nach Anspruch 3, **dadurch gekennzeichnet, dass** drei Stegabschnitte (11) über den Umfang des Synchronrings (3) äquidistant angeordnet sind.

5. Anordnung nach Anspruch 1, **dadurch gekennzeichnet, dass** die mindestens eine Durchbrechung (8) im Synchronring (4), insbesondere im Synchron-Außenring, als Ausstanzung oder Bohrung ausgebildet und allseitig vom Material des Synchronrings (4) umgeben ist.

6. Anordnung nach Anspruch 1, **dadurch gekennzeichnet, dass** das Halteelement (10) als sich radial nach innen erstreckender, am Halteabschnitt oder Haltekörper (7) angeordneter Vorsprung ausgebildet ist.

7. Anordnung nach Anspruch 1, **dadurch gekennzeichnet, dass** das Halteelement (10) als sich einseitig in Umfangsrichtung erstreckender, am Halteabschnitt oder Haltekörper (7) angeordneter Vorsprung ausgebildet ist.

8. Anordnung nach Anspruch 1, **dadurch gekennzeichnet, dass** das Halteelement (10) als sich beidseitig in Umfangsrichtung erstreckender, am Halteabschnitt oder Haltekörper (7) angeordneter Vorsprung ausgebildet ist.

9. Anordnung nach Anspruch 7 oder 8, **dadurch gekennzeichnet, dass** das Halteelement (10) mindestens eine sich zum axialen Ende (9) hin verjüngende Einführschräge aufweist.

10. Anordnung nach Anspruch 8 und 9, **dadurch gekennzeichnet, dass** das Halteelement (10) pfeilförmig ausgebildet ist.

11. Anordnung nach Anspruch 1, **dadurch gekennzeichnet, dass** das Halteelement (10) als Ring ausgebildet ist, der in einer im Halteabschnitt oder Haltekörper (7) eingearbeitete Nut (12) angeordnet ist.

12. Anordnung nach Anspruch 11, **dadurch gekennzeichnet, dass** sich der Ring (10) vom Halteabschnitt oder Haltekörper (7) aus radial nach innen erstreckt.

13. Anordnung nach Anspruch 1, **dadurch gekennzeichnet, dass** der Synchronring (3), insbesondere der Synchron-Innenring, und der Halteabschnitt oder Haltekörper (7) einstückig ausgebildet sind.

14. Anordnung nach Anspruch 1, **dadurch gekennzeichnet, dass** der Synchronring (3), insbesondere der Synchron-Innenring, und der Halteabschnitt oder Haltekörper (7) als separate miteinander verbundene Körper ausgebildet sind.

15. Anordnung nach Anspruch 1, **dadurch gekennzeichnet, dass** der Halteabschnitt oder Haltekörper (7) als Federabschnitt ausgebildet ist.

16. Anordnung nach Anspruch 15, **dadurch gekennzeichnet, dass** der Federabschnitt (7) in seinem axialen Endbereich (9) das sich radial nach innen erstreckende Halteelement (10) aufweist.

17. Anordnung nach Anspruch 15, **dadurch gekennzeichnet, dass** der Federabschnitt (7) Teil einer Federspange (12) ist, die an einem der Synchronringe (3), insbesondere an dem Synchron-Innenring, in einem axialen Endbereich angelegt ist.

18. Anordnung nach Anspruch 17, **dadurch gekennzeichnet, dass** der Synchronring (3), insbesondere der Synchron-Innenring, für die Aufnahme der Federspange (12) eine Ausnehmung (13) aufweist.
